# EUROPÄISCHE PATENTANMELDUNG

(11) **EP 2 826 971 A1**
(43) Veröffentlichungstag der Anmeldung: **21.01.2015**
(21) Anmeldenummer: 13003608.0
(22) Anmeldetag: 17.07.2013
(51) Int. Cl.: F01N 3/20, F01N 3/023, F01N 3/035, F01N 13/02

(54) **Verfahren zur Verminderung von Stickoxiden in dieselmotorischen Abgasen und Abgasnachbehandlungssystem zur Durchführung des Verfahrens**

(71) Anmelder: DEUTZ Aktiengesellschaft, 51149 Köln (DE)
(72) Erfinder: Wittrock, Meike, 51427 Bergisch-Gladbach (DE); Beberdick, Wolfgang, 51377 Leverkusen (DE)

(57) **Zusammenfassung**

Abgasnachbehandlungssystem für insbesondere V-Dieselmotoren, umfassend, im Abgasstrang des Motors in Strömungsrichtung des Abgases angeordnet, eine erste SCR-Stufe, einen katalytisch aktivierten Partikelfilter (cDPF), eine zweite SCR-Stufe und einen Ammoniak-Schlupf-Katalysator (ASC).

## Beschreibung

Die Erfindung betrifft ein Verfahren zur Verminderung von Stickoxiden in dieselmotorischen Abgasen und eine Vorrichtung zur Durchführung des erfindungsgemäßen Verfahrens.

DE 10 2005 009 686 A1 offenbart ein Verfahren zur Abgasnachbehandlung bei Dieselmotoren, bei welchem das Abgas durch einen im Abgasstrang angeordneten regenerierbaren Partikelfilter sowie einen NOₓ-Katalysator geleitet wird, wobei das Abgas zuerst durch einen motornah angeordneten NOₓ-Katalysator vom Harnstoff-SCR-Typ (SCR = selective catalytic reduction) und anschließend durch einen Partikelfilter vom CSF-Typ (CSF = catalysed soot filter) geleitet wird, wobei dem Partikelfilter die für seine Regeneration erforderliche Energie von außen zugeführt wird. Weiterhin wird eine Vorrichtung zur Abgasnachbehandlung bei Dieselmotoren mit einem im Abgasstrang angeordneten regenerierbaren Partikelfilter sowie einem NOₓ-Katalysator beschrieben, mit einem motornah angeordneten NOₓ-Katalysator vom Harnstoff-SCR-Typ und einem stromabwärts davon angeordneten Partikelfilter vom CSF-Typ und einer dem Partikelfilter zugeordneten Einrichtung zum Zuführen der für seine Regeneration erforderlichen Energie.

In der US 20050284134 A1 wird eine Abgasnachbehandlungsvorrichtung gezeigt, die eine mehrstufige SCR-Katalysatoranordnung darstellt. Diese mehrstufige SCR-Katalysatoranordnung zeichnet sich dadurch aus, dass der Hauptanteil der im Abgas enthaltenen Stickoxide, nämlich 80 - 95 % der in der Rohemission des Fahrzeuges enthaltenen Stickoxide, über der anströmseitig zuerst angeordneten SCR-Stufe entfernt wird. Die zweite SCR-Stufe dient der Vervollständigung der Stickoxidumsetzung, wobei die zweite Stufe, bemessen an der Stickoxid-Konzentration im Abgas nach der ersten SCR-Stufe, mit einer unterstöchiometrischen Menge an Ammoniak betrieben wird, um das Risiko von Ammoniakschlupf durch die Gesamtabgasanlage zu minimieren.

Die DE 10 2010 032 544 A1 offenbart ein Schadstoffbegrenzungssystem für einen Verbrennungsmotor mit einem Reduktionsmittelinjektor; einem ersten SCR-Bereich, der stromabwärts des Reduktionsmittelinjektors positioniert ist; einem zweiten SCR-Bereich, der stromabwärts des ersten SCR-Bereichs positioniert ist; und einem elektronischen Steuergerät, wobei in einem ersten Modus Anpassen von eingespritztem Reduktionsmittel, beruhend auf einer in dem ersten SCR-Bereich gespeicherten Reduktionsmittelmenge; und in einem zweiten Modus Anpassen von eingespritztem Reduktionsmittel, beruhend auf einer in dem zweiten SCR-Bereich gespeicherten Reduktionsmittelmenge, sowie ein Verfahren zum Steuern eines Schadstoffbegrenzungssystems mit einem ersten SCR-Bereich stromaufwärts eines zweiten SCR-Bereichs, wobei das Verfahren umfasst: in einem ersten Modus: Anpassen einer stromaufwärts des ersten SCR-Bereichs gelieferten Reduktionsmittelmenge, beruhend auf einem Zustand des ersten SCR-Bereichs; und in einem zweiten Modus: Anpassen der stromaufwärts des ersten SCR-Bereichs gelieferten Reduktionsmittelmenge, beruhend auf einem Zustand des zweiten SCR-Bereichs.

Der Reduktionsmittelbedarf für das gesamte System wird über einen einzigen Reduktionsmittelinjektor, der stromaufwärts zum ersten SCR-Bereich angeordnet ist, bereitgestellt.

Ein Diagnosesystem für ein Abgasbehandlungssystem zum Behandeln eines Abgases, das aus einem Motor austritt, umfassend: einen unterstromigen Sensor, der eine unterstromige Temperatur des Abgases überwacht; ein Dosiersystem, das ein Dosiermittel selektiv in das Abgas einspritzt; und ein Steuermodul, das einen Temperaturdifferenzschwellenwert auf der Basis einer Menge des Dosiermittels bestimmt, das eine Temperaturdifferenz des Abgases auf der Basis der unterstromigen Temperatur berechnet und das einen Betrieb des Dosiersystems auf der Basis der Temperaturdifferenz und des Temperaturdifferenzschwellenwertes bewertet, ist aus der DE 10 2006 025 131 B4 bekannt. Des Weiteren wird dort ein Verfahren zum Überwachen eines Betriebs eines Dosiersystems zum Behandeln von Abgas eines Motors gezeigt, das die Schritte umfasst: Überwachen einer unterstromigen Temperatur des Abgases unterstromig des Dosiersystems; Einspritzen eines Dosiermittels in das Abgas; Bestimmen eines Temperaturdifferenzschwellenwerts auf der Basis einer Menge des Dosiermittels; Berechnen einer Temperaturdifferenz des Abgases auf der Basis der unterstromigen Temperatur; und Bewerten eines Betriebs des Dosiersystems auf der Basis der Temperaturdifferenz und des Temperaturdifferenzschwellenwerts.

Des Weiteren ist es bei Motoren ohne Abgasrückführungssystem (AGR-System), die unter Minimierung der motorischen Partikelemission auf ein sehr hohes NOₓ-Rohemissionsniveau (8 - 12 g/kWh NOₓ) abgestimmt sind, mit einer derartigen Abstimmung zur Erfüllung der Abgasgesetzgebung nach Tier4 (final) bzw. EU Stufe IV ausreichend, die Emissionen NOₓ, HC und CO im Wege der Abgasnachbehandlung zu vermindern, wobei an die Entstickungsleistung des Abgasnachbehandlungssystems mit mindestens 97 % NOₓ-Konvertierung aufgrund der hohen NOₓ-Gehalte in der Rohemission des Motors sehr hohe Anforderungen gestellt werden.

Mit der Emissionsstufe Tier5/EU Stufe V werden die zulässigen Partikelemissionen voraussichtlich nicht mehr nach der zulässigen Partikelmasse, sondern nach der zulässigen Partikelanzahl begrenzt. Diese Änderung in der Emissionsgesetzgebung führt dazu, dass auch Motoren mit geringer motorischer Partikelmassenemission künftig mit Dieselpartikelfiltern ausgestattet werden müssen. Insbesondere für Motoren ohne AGR führt dies zur Aufgabe der vorliegenden Erfindung, dass Wege gefunden werden müssen, um ein Dieselpartikelfilter in ein hinsichtlich Entstickung hocheffizientes Abgasnachbehandlungssystem zu integrieren.

Diese Aufgabe wird gelöst durch ein Verfahren zur Reinigung von Dieselmotorenabgasen, enthaltend Kohlenwasserstoffe, Kohlenmonoxid, Rußpartikel und Stickoxide, bestehend aus NO und NO₂, das in Strömungsrichtung des Abgases die folgenden Verfahrensschritte umfasst:
a.) Einbringen von Ammoniak oder einer unter Betriebsbedingungen unter Freisetzung von Ammoniak zersetzlichen Vorläuferverbindung in das zu reinigende Abgas;
b.) Durchleiten des aus a.) resultierenden Abgases durch einen ersten SCR-Katalysator unter Bedingungen, die wirksam sind, um weniger als oder maximal 50 % der vor dem ersten SCR-Katalysator im Abgas vorhandenen Stickoxide zu Stickstoff umzuwandeln;
c.) Durchleiten des aus b.) resultierenden Abgases durch ein katalytisch aktiviertes Partikelfilter, wobei im Partikelfilter Rußpartikel gesammelt und wenigstens anteilig mit im Abgas enthaltenen NO₂ und/oder O₂ oxidiert werden;
d.) Einbringen von Ammoniak oder einer unter Betriebsbedingungen unter Freisetzung von Ammoniak zersetzlichen Vorläuferverbindung in das aus c.) resultierende Abgas;
e.) Durchleiten des aus d.) resultierenden Abgases durch einen zweiten SCR-Katalysator unter Bedingungen, die wirksam sind, um die vor dem zweiten SCR-Katalysator vorhandenen Stickoxide möglichst vollständig in Stickstoff umzuwandeln.

Weiterhin wird die Aufgabe gelöst durch ein Abgasnachbehandlungssystem zur Durchführung des erfindungsgemäßen Verfahrens, umfassend in Strömungsrichtung des Abgases in dieser Reihenfolge:
a.) eine erste Vorrichtung zur Einbringung von Ammoniak oder einer unter Betriebsbedingungen unter Freisetzung von Ammoniak zersetzlichen Vorläuferverbindung;
b.) einen ersten SCR-Katalysator;
c.) ein katalytisch aktiviertes Partikelfilter;
d.) eine zweite Vorrichtung zur Einbringung von Ammoniak oder einer unter Betriebsbedingungen unter Freisetzung von Ammoniak zersetzlichen Vorläuferverbindung;
e.) einen zweiten SCR-Katalysator.

Durch das erfindungsgemäße Verfahren, das in einem erfindungsgemäßen Abgasnachbehandlungssystem durchgeführt werden kann, wird es möglich, mindestens 97 % der im zu reinigenden Abgas vorhandenen Stickoxide zu unschädlichem Stickstoff umzusetzen und zugleich die Zahl der im Abgasendrohr emittierten Partikel soweit zu begrenzen, dass die aufkommenden Partikelzahlgrenzwerte eingehalten werden können. Für die Gesamtfunktion des Systems ist es wesentlich, dass die Entstickungsleistung der ersten SCR-Stufe auf maximal 50 % der im zu reinigenden Abgas vorhandenen Stickoxide begrenzt wird. Nur so ist gewährleistet, dass das in Schritt c.) in das katalytisch aktivierte Partikelfilter durch die im Abgas nach Durchtritt durch den ersten SCR-Katalysator noch vorhandene Reststickoxid mittels passivem Regenerationsverfahren (nach dem sog. CRT^{®}-Effekt, d. h. Abbrand der abgelagerten Rußpartikel mit NO₂ bei geeigneten Betriebspunkten) regeneriert werden kann und während des Betriebes nicht verstopft.

Neben der Umsetzung von maximal 50 % der im zu reinigenden Abgas enthaltenen Stickoxide werden im ersten SCR-Katalysator außerdem bevorzugt auch die im zu reinigenden Abgas enthaltenen Kohlenwasserstoffe (HC) und/oder das im zu reinigenden Abgas enthaltene Kohlenmonoxid (CO) wenigstens anteilig zu Kohlendioxid (CO₂) umgewandelt. Hierzu werden bevorzugt SCR-Katalysatoren eingesetzt, die sich durch eine gewisse Oxidationsfunktion gegenüber HC und CO auszeichnen, über eine hinreichende thermische Alterungsstabilität verfügen und gegenüber der (partiellen) Vergiftung durch Kohlenwasserstoffe resistent sind. Solche SCR-Katalysatoren enthalten bevorzugt eine oder mehrere Verbindungen, ausgewählt aus der Gruppe bestehend aus Vanadiumoxid, Titanoxid, Wolframoxid, Ceroxid, Lanthanoxid, Eisenoxid und Aluminiumoxid. Des Weiteren kommen SCR-Katalysatoren in Frage, die SCRkatalytisch aktive Beschichtungen auf der Basis von kleinporigen Zeolithen oder zeolithähnlichen Verbindungen enthalten, und die nicht über die Fähigkeit verfügen, Kohlenwasserstoffe in der Beschichtung (reversibel) einzulagern.

Dabei ist der SCR-Katalysator für diese erste Entstickungsstufe so auszuwählen, dass er bereits bei geringem NO₂-Anteil im in den Katalysator einströmenden Abgas hinreichende NOₓ-Konvertierungsraten zeigt. Dieses Kriterium ist bei Verwendung der o. g. Katalysatoren in der Regel erfüllt.

Nach Durchgang durch den ersten SCR-Katalysator wird das zu reinigende Abgas durch ein katalytisch aktives Partikelfilter geleitet, um die im Abgas enthaltenen Rußpartikel zu entfernen. Des Weiteren werden in diesem katalytisch aktivierten Partikelfilter bevorzugt Kohlenwasserstoffe und/oder Kohlenmonoxid, welche einerseits aus dem zu reinigenden Abgas stammen können und im vorgelagerten SCR-Katalysator nicht zu CO₂ umgesetzt wurden, oder andererseits als Sekundäremission während der Regeneration des Partikelfilters aus dem Rußabbrand entstanden sein können, mindestens anteilig von CO₂ oxidiert. Besonders bevorzugt wird weiterhin auch Stickstoffmonoxid (NO) aus dem Abgas oder aus der Oxidation von Rußpartikeln mit NO₂ im katalytisch aktiven Partikelfilter mindestens anteilig zu NO₂ oxidiert, so dass im aus Verfahrensschritt c.) resultierenden Abgas ein NO₂/NOₓ-Verhältnis von 0,3 bis 0,8 vorliegt. Ganz besonders bevorzugt liegt im aus Schritt c.) resultierenden Abgas ein NO₂/NOₓ-Verhältnis von 0,4 bis 0,6 vor.

Hierzu wird bevorzugt ein Partikelfilter, umfassend ein Wandflussfiltersubstrat und eine oxidationskatalytisch aktive Beschichtung, verwendet, wobei die oxidationskatalytische Beschichtung eines oder mehrere Edelmetalle, ausgewählt aus der Gruppe bestehend aus Platin, Palladium und Rhodium, enthält. Diese oxidationskatalytisch aktive Beschichtung ist bevorzugt in den Kanalwänden des Wandflussfiltersubstrats zwischen Einlass- und Auslasskanälen vorhanden. Durch eine solche Anordnung ist gewährleistet, dass wesentliche Teile des zu reinigenden Abgases erst nach Abscheidung der Partikel mit der oxidationskatalytisch aktiven Beschichtung in Kontakt kommen. Dies hat zum einen den Vorteil, dass beim Kontakt mit der oxidationskatalytisch aktiven Beschichtung aus NO gebildetes NO₂ nicht mehr durch den passiven Rußabbrand nach dem CRT^{®}-Effekt verbraucht wird und folglich den wieteren Verfahrensschritten, insbesondere der SCR-Reaktion in der nachgelagerten zweiten SCR-Stufe zur Verfügung steht. Zum anderen gewährleistet eine solche Anordnung der oxidationskatalytisch aktiven Beschichtung im Wandflussfiltersubstrat, dass auch oxidationsfähige Sekundäremissionen wie CO und Kohlenwasserstoffe, die während der Partikelfilterregeneration in den Einlasskanälen gebildet werden können, beim Durchtritt des Abgases durch die Wand in die Auslasskanäle zu unschädlichem CO₂ oxidiert werden können.

Zur Gewährleistung hinreichend guter Partikelfilterregenerationsraten kann es besonders bevorzugt sein, dass das katalytisch aktivierte Partikelfilter weiterhin in den Einlasskanälen eine auf die Kanalwände aufgebrachte anströmseitige Beschichtungszone enthält, die sich über 10 - 50 % der Länge des Filters erstreckt und eine weitere oxidationskatalytisch aktive Beschichtung, enthaltend eines oder mehrere Edelmetalle ausgewählt aus der Gruppe bestehend aus Platin, Palladium und Rhodium, umfasst. Beim Kontakt des in das katalytisch aktivierte Partikelfilter einströmenden Abgases mit dieser oxidationskatalytisch aktiven Beschichtung wird dann unter anderem im Abgas enthaltenes Stickstoffmonoxid (NO) mindestens anteilig zu NO₂ oxidiert. Das so entstehende NO₂ kann dann im Partikelfilter zum Rußabbrand genutzt werden, so dass die passive Regeneration des Filters gefördert wird.

Da die (Nach-)Bildung von NO₂, das zur Partikelfilterregeneration benötigt wird, in einer im Partikelfilter enthaltenen anströmseitigen Zone häufig mit schlechteren Ausbeuten abläuft, als die Bereitstellung des NO₂ im Abgas vor Eintritt in das Partikelfilter, gehört es zu den bevorzugten Ausführungsformen des erfindungsgemäßen Verfahrens, dass das aus Verfahrensschritt b.) resultierende Abgas vor Eintritt in das katalytisch aktive Partikelfilter durch einen Dieseloxidationskatalysator geleitet wird, der wirksam ist, um im Abgas enthaltene Kohlenwasserstoffe und Kohlenmonoxid mindestens anteilig zu CO₂, und im Abgas enthaltenes NO mindestens anteilig zu NO₂ zu oxidieren. In diesem Falle wird ein Dieseloxidationskatalysator zwischen dem ersten SCR-Katalysator und dem katalytisch aktivierten Partikelfilter angeordnet. Besonders bevorzugt wird der Dieseloxidationskatalysator jedoch als abströmseitige Beschichtungszone auf dem ersten SCR-Katalysator angeordnet, so dass Bauraum eingespart werden kann.

Nach Durchgang durch das katalytisch aktivierte Partikelfilter wird in das Abgas erfindungsgemäß erneut Ammoniak oder eine unter Betriebsbedingungen zu Ammoniak ersetzliche Vorläuferverbindung zugegeben. Dann wird das resultierende Abgas durch einen zweiten SCR-Katalysator geleitet unter Bedingungen, die wirksam sind, um die vor dem weiten SCR-Katalysator vorhandenen Stickoxide möglichst vollständig in Stickstoff umzuwandeln.

Der zweite SCR-Katalysator ist so auszugestalten, dass er unter Betriebsbedingungen möglichst hohe Entstickungsraten aufweist, da im zu reinigenden Abgas beim Einleiten in diesen zweiten SCR-Katalysator noch mindestens 50 % der ursprünglich im Abgas vorhandenen Stickoxide enthalten sind. Dabei kann es notwendig sein, dass der zweite SCR-Katalysator ein größeres Katalysatorvolumen aufweist, als der erste SCR-Katalysator.

Bevorzugt weist der zweite Katalysator eine oder mehrere Verbindungen auf, die ausgewählt sind aus der Gruppe der mit Übergangsmetallen ausgetauschten Zeolithe und/oder der mit Übergangsmetallen ausgetauschten zeolithähnlichen Verbindungen. Besonders bevorzugt sind die Übergangsmetalle, ausgewählt aus der Gruppe bestehend aus Eisen, Kupfer, Cobalt, Nickel und Cer, ganz besonders bevorzugt aus der Gruppe bestehend aus Eisen und Kupfer. Die Zeolithe und/oder die zeolithähnlichen Verbindungen sind besonders bevorzugt ausgewählt aus der Gruppe bestehend aus β-Zeolith, ZSM-5, SAPO und ALPO.

Bei der Durchführung des erfindungsgemäßen Verfahrens wird insbesondere in Verfahrensschritt d.) bevorzugt eine Menge an Ammoniak oder der unter Betriebsbedingungen zu Ammoniak zersetzlichen Verbindung zugegeben, die so gewählt ist, dass das als Reduktionsmittel für Stickoxide verwendete Ammoniak am Eintritt des SCR-Katalysators in überstöchiometrischem Verhältnis zu den zu reduzierenden Stickoxiden vorliegt. Dadurch wird gewährleistet, dass der Umsatz der im zweiten SCR-Katalysator ablaufenden SCR-Reaktion nicht durch einen Mangel an Reduktionsmitteln begrenzt wird.

Um bei einem solchen Vorgehen zu verhindern, dass unverbrauchtes Ammoniak, das ebenfalls ein gesundheitsgefährdendes Schadgas ist, in die Atmosphäre gelangt, wird das aus e.) resultierende Abgas durch einen Ammoniakoxidationskatalysator geleitet unter Bedingungen, die wirksam sind, um Ammoniak mindestens anteilig zu Stickstoff zu oxidieren. Im erfindungsgemäßen Abgasnachbehandlungssystem zur Durchführung des erfindungsgemäßen Verfahrens wird ein solcher Ammoniakoxidationskatalysator abströmseitig zum zweiten SCR-Katalysator angeordnet. Besonders bevorzugt wird der Ammoniakoxidationskatalysator als abströmseitige Beschichtungszone auf dem zweiten SCR-Katalysator angeordnet.

Mit dem erfindungsgemäßen Verfahren und dem angegebenen erfindungsgemäßen Abgasnachbehandlungssystem wird es möglich, insbesondere das Abgas von Dieselmotoren ohne Abgasrückführung, die neben Kohlenwasserstoffen, Kohlenmonoxiden und Partikeln sehr hohe Stickoxidgehalte aufweisen, so zu reinigen, dass damit die künftig zu erwartenden verschärften Abgasgrenzwerte erfüllt und zugleich die zu erwartenden Partikelzahlgrenzwerte eingehalten werden können. Dabei kommt das erfindungsgemäße Abgasnachbehandlungssystem mit einer begrenzten Anzahl an Abgasreinigungsaggregaten aus. Insbesondere wird mit einem solchen System bei geschickter Auslegung trotz Einführung des Partikelfilters nicht mehr Bauraum benötigt, als bei den heute für Motoren ohne Abgasrückführung üblichen hocheffizienten, d. h. i.d.R. mehrstufigen SCR-Systemen.

Die Erfindung wird im Folgenden anhand einiger Beispiele und Figuren erläutert:

### Beispiel 1:

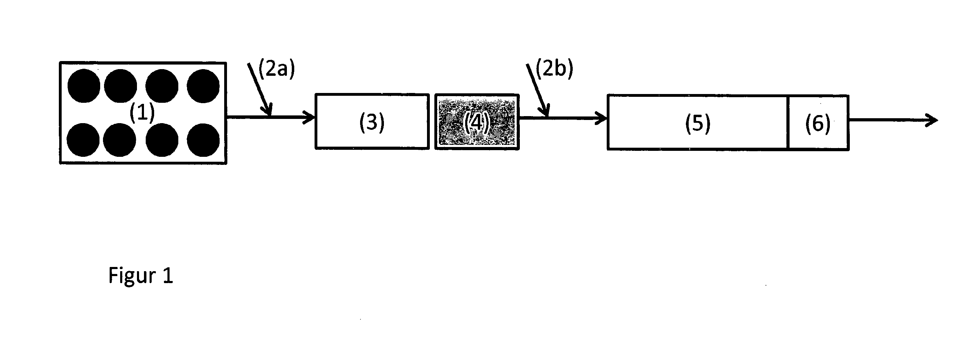

Zur Abgasreinigung eines V8-Dieselmotors (1) mit 16 Litern Hubraum und einer Leistung von 520 kW wurde ein erfindungsgemäßes Abgasreinigungssystem aufgebaut, wie es in Figur 1 schematisch dargestellt ist. Der Motor wurde so abgestimmt, dass in der Rohemission des Motors bei Eintritt in das erfindungsgemäße Abgasnachbehandlungssystem 10 g/kWh NOₓ und 18 mg/kWh Partikel vorlagen.

Dem aus dem Motor austretenden Abgas wurde zunächst Harnstoff-Wasser-Lösung (HWL) als unter Betriebsbedingungen unter Freisetzung zu Ammoniak zersetzlicher Vorläuferverbindung zugeführt (2a). Dann wurde das Abgas durch einen ersten SCR-Katalysator (3) geleitet, der ein Katalysatorvolumen von 26 L aufwies. Dieser Katalysator enthielt Vanadiumoxid-Wolframoxid-Titanoxid als katalytisch aktive Komponente und zeigte bei einer in der Nennleistung anliegenden Raumgeschwindigkeit von rd. 90.000 1/h einen NOₓ-Umsatz vor weniger als 50 % der in der Rohemission vorhandenen Stickoxide.

Nach Durchgang durch diesen ersten SCR-Katalysator wurde das Abgas durch ein katalytisch aktiviertes Partikelfilter (4) geleitet, das ein Wandflussfiltersubstrat enthielt, wobei in den Wänden zwischen Einlass- und Auslasskanälen eine oxidationskatalytisch aktiven Beschichtung, enthaltend 2 g Platin als katalytisch aktive Komponente, eingebracht war.

Nach Durchgang durch das Partikelfilter wurde dem Abgas erneut HWL zugeführt (2b) und das Abgas durch einen zweiten SCR-Katalysator geleitet. Der zweite SCR-Katalysator (5) wies ein Gesamtvolumen von 35 L auf und enthielt eine mit Eisen ausgetauschte Zeolith-Verbindung als katalytisch aktive Komponente. Im Gesamtvolumen des zweiten SCR-Katalysators enthalten war ein als abströmseitige Beschichtungszone aufgebrachter, hoch selektiver Ammoniakoxidationskatalysator (ASC). Die Länge der abströmseitigen ASC-Zone betrug 25 % der Gesamtlänge des zweiten SCR-Katalysators. Diese Zone enthielt 0,88 g Platin als oxidationsaktive Komponente.

Eine Abgasmessung nach Austritt aus dem katalytisch aktivierten Partikelfilter zeigte, dass das aus Verfahrensschritt c.) resultierende Abgas weniger als 5 g/kWh CO und weniger als 0,19 g/kWh HC enthielt. Des Weiteren zeigte sich, dass im aus Verfahrensschritt c.) resultierenden Abgas je nach Betriebspunkt des Motors ein NO₂/NOₓ-Verhältnis von 0,25 bis 0,55 vorlag.

Eine zweite Abgasmessung im Abgasendrohr nach Durchtritt durch den zweiten SCR-Katalysator zeigte, dass auch der NOₓ-Grenzwert von 0,4 g/kWh eingehalten wurde. Die beobachteten Ammoniakkonzentrationen im Abgasendrohr überstiegen 10 Vppm im zeitlichen Mittel nicht.

Eine Partikelzahlmessung ergab, dass der zu erwartende Partikelzahlgrenzwert von 10¹²/kWh ebenfalls eingehalten wurde.

Das beobachtete Regenerationsverhalten des Partikeifilters erwies sich jedoch als verbesserungsfähig. Bei der Applikation dieses Systems sind daher Maßnahmen zur aktiven Partikelfilterregeneration vorzusehen. Bevorzugt kann hier ein katalytischer Brenner verwendet werden, wie es in der WO 2010139429 und DE 10 2009 023 550 beschrieben ist. Da der erste SCR-Katalysator in der gewählten Ausgestaltung sowohl eine gute Oxidationsfähigkeit gegenüber gasförmigen Kohlenwasserstoffen, als auch eine gute thermische Beständigkeit aufweist, ist ein zusätzlicher vorgelagerter Dieseloxidationskatalysator für die Funktionsweise der Regeneration nicht erforderlich.

### Beispiel 2:

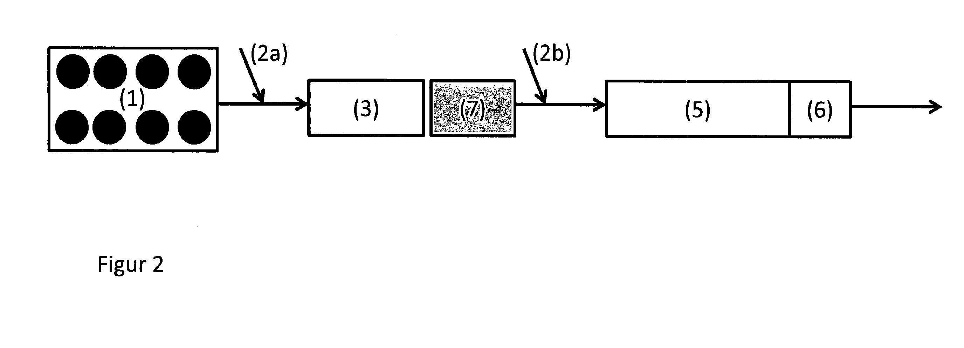

Im System aus Beispiel 1 wurde das katalytisch aktive Partikelfilter (4) durch ein anderes katalytisch aktiviertes Partikelfilter (7) ausgetauscht, das zusätzlich zu der oxidationskatalytisch aktiven Beschichtung in der Wand zwischen den Einlass- und Auslasskanälen eine weitere oxidationskatalytisch aktive Beschichtung enthielt, die anströmseitig auf die Wände in den Einlasskanälen aufgebracht worden war. Figur 2 zeigt schematisch diese Ausführungsform des erfindungsgemäßen Abgasnachbehandlungssystems. Die im Filter enthaltene anströmseitige, oxidationskatalytisch aktive Beschichtungszone erstreckte sich über eine Länge von 50 % der Gesamtlänge des Wandflussfiltersubstrats und enthielt 0,88 g Platin.

Abgasmessungen mit diesem System zeigten, dass nach Durchtritt des Abgases durch das Partikelfilter und vor Eindosierung von HWL in Schritt d.) im Abgas ein NO₂/NOₓ-Verhältnis zwischen 0,35 und 0,6, je nach Betriebspunkt des Motors, vorlag. Eine weitere Messung am Abgasendrohr zeigte, dass auch mit diesem System die in Beispiel 1 bereits genannten Emissionsgrenzwerte sicher eingehalten werden konnten.

Zusätzlich zeigte dieses System eine im Vergleich zu Beispiel 1 abgesenkte "Balance Point Temperature", was äquivalent ist mit einem verbesserten passiven Regenerationsverhalten des Partikelfilters.

### Beispiel 3:

In einem weiteren Versuch wurde das System aus Beispiel 1 wie folgt abgeändert:

Der erste SCR-Katalysator mit einem Katalysatorvolumen von 26 L wurde ausgetauscht gegen ein volumengleiches Bauteil, das jedoch nur auf den anströmseitigen 2/3 seiner Länge eine SCR-aktive katalytische Beschichtung (3') mit Vanadiumoxid-Wolframoxid-Titanoxid als katalytisch aktiver Komponente enthielt. Das abströmseitige Drittel des Bauteils war mit einer Dieseloxidationskatalysatorbeschichtung (8) versehen worden, die 4 g Platin als katalytisch aktive Komponente enthielt.

Da das in der ersten Stufe zur Verfügung gestellte SCR-Katalysatorvolumen um 33,3 % kleiner war als in Beispiel 1, wurde ein zweiter SCR-Katalysator (5') eingesetzt, der insgesamt 43,5 L Katalysatorvolumen aufwies und ebenfalls eine abströmseitige ASC-Beschichtungszone umfasste. Die aufgebrachte ASC-Zone war volumengleich ausgestaltet wie in Beispiel 1 und enthielt ebenfalls 0,88 g Platin als oxidationskatalytisch aktive Komponente.

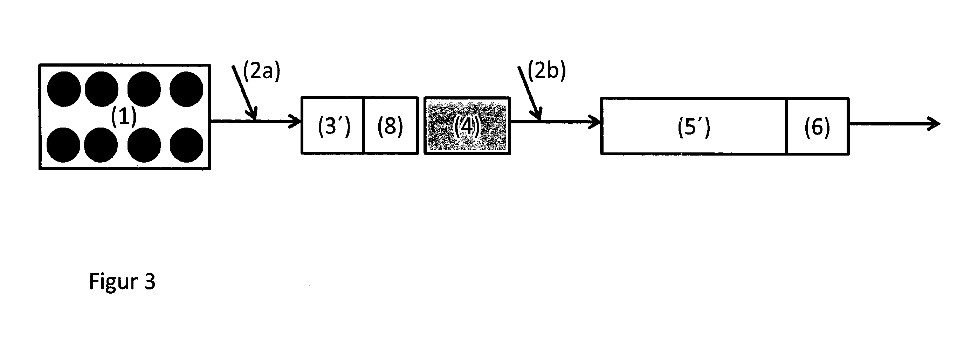

Das verwendete System ist schematisch in Figur 3 dargestellt.

Wie in den vorangegangenen Beispielen zeigten die Abgasmessungen im Abgasendrohr auch hier, dass die bereits in Beispiel 1 angegebenen Emissionsgrenzwerte sicher eingehalten werden konnten. Dieses System zeigte weiterhin eine im Vergleich zu Beispiel 2 noch einmal abgesenkte "Balance-Point-Temperature". Des Weiteren waren die tatsächlich gefundenen CO- und HC-Restemissionen im Abgasendrohr geringer als in den Beispielen 1 und 2.

## Patentansprüche

1. Verfahren zur Reinigung von Dieselmotorenabgasen, enthaltend Koh-
a.) lenwasserstoffe, Kohlenmonoxid, Rußpartikel und Stickoxide bestehend aus NO und NO₂, umfassend in Strömungsrichtung des Abgases die folgenden Verfahrensschritte: Einbringen von Ammoniak oder einer unter Betriebsbedingungen unter Freisetzung von Ammoniak zersetzlichen Vorläuferverbindung in das zu reinigende Abgas;
b.) Durchleiten des aus a.) resultierenden Abgases durch einen ersten SCR-Katalysator unter Bedingungen, die wirksam sind, um weniger als oder maximal 50 % der vor dem ersten SCR-Katalysator im Abgas vorhandenen Stickoxide zu Stickstoff umzuwandeln;
c.) Durchleiten des aus b.) resultierenden Abgases durch ein katalytisch aktiviertes Partikelfilter, wobei im Partikelfilter Rußpartikel gesammelt und wenigstens anteilig mit im Abgas enthaltenen NO₂ und/oder O₂ oxidiert werden;
d.) Einbringen von Ammoniak oder einer unter Betriebsbedingungen unter Freisetzung von Ammoniak zersetzlichen Vorläuferverbindung in das aus c.) resultierende Abgas;
e.) Durchleiten des aus d.) resultierenden Abgases durch einen zweiten SCR-Katalysator unter Bedingungen, die wirksam sind, um die vor dem zweiten SCR-Katalysator vorhandenen Stickoxide möglichst vollständig in Stickstoff umzuwandeln.

2. Verfahren nach Anspruch 1,
**dadurch gekennzeichnet, dass** im Abgas enthaltene Kohlenwasserstoffe und Kohlenmonoxide im ersten SCR-Katalysator wenigstens anteilig in CO und/oder CO₂ umgewandelt werden.

3. Verfahren nach Anspruch 1 oder 2,
**dadurch gekennzeichnet, dass** Kohlenwasserstoffe und/oder Kohlenmonoxid aus dem Abgas und/oder aus der Oxidation von Rußpartikeln im katalytisch aktivierten Partikelfilter mindestens anteilig zu CO₂ oxidiert werden.

4. Verfahren nach einem der Ansprüche 1 bis 3,
**dadurch gekennzeichnet, dass** NO aus dem Abgas und/oder aus der Oxidation von Rußpartikeln mit NO₂ im katalytisch aktivierten Partikelfilter mindestens anteilig zu NO₂ oxidiert wird, so dass im aus c.) resultierenden Abgas ein NO₂/NOₓ-Verhältnis von 0,3 bis 0,8 vorliegt.

5. Verfahren nach einem der vorstehenden Ansprüche,
**dadurch gekennzeichnet, dass** das aus e.) resultierende Abgas durch einen Ammoniakoxidationskatalysator geleitet wird unter Bedingungen, die wirksam sind, um Ammoniak mindestens anteilig zu Stickstoff zu oxidieren.

6. Verfahren nach Anspruch 1,
**dadurch gekennzeichnet, dass** das aus b.) resultierende Abgas vor Eintritt in das katalytisch aktive Partikelfilter durch einen Dieseloxidationskatalysator geleitet wird, der wirksam ist, um im Abgas enthaltene Kohlenwasserstoffe und Kohlenmonoxid mindestens anteilig zu CO₂, und im Abgas enthaltenes NO mindestens anteilig zu NO₂ zu oxidieren.

7. Abgasnachbehandlungssystem zur Durchführung des Verfahrens nach einem der vorstehenden Ansprüche,
umfassend in Strömungsrichtung des Abgases in dieser Reihenfolge:
a.) eine erste Vorrichtung zur Einbringung von Ammoniak oder einer unter Betriebsbedingungen unter Freisetzung von Ammoniak zersetzlichen Vorläuferverbindung;
b.) einen ersten SCR-Katalysator,
c.) ein katalytisch aktiviertes Partikelfilter;
d.) eine zweite Vorrichtung zur Einbringung von Ammoniak oder einer unter Betriebsbedingungen unter Freisetzung von Ammoniak zersetzlichen Vorläuferverbindung;
e.) einen zweiten SCR-Katalysator.

8. Abgasnachbehandlungssystem zur Durchführung des Verfahrens nach Anspruch 2,
**dadurch gekennzeichnet, dass** der erste SCR-Katalysator eine oder mehrere Verbindungen, ausgewählt aus der Gruppe bestehend aus Vanadiumoxid, Titanoxid, Wolframoxid, Ceroxid, Lanthanoxid, Eisenoxid und Aluminiumoxid, enthält.

9. Abgasnachbehandlungssystem zur Durchführung des Verfahrens nach einem der Ansprüche 3 und 4,
**dadurch gekennzeichnet, dass** das katalytisch aktivierte Partikelfilter ein Wandflussfiltersubstrat umfasst, welches eine oxidationskatalytisch aktive Beschichtung, enthaltend eines oder mehrere Edelmetalle ausgewählt aus der Gruppe bestehend aus Platin, Palladium und Rhodium, enthält.

10. Abgasnachbehandlungssystem nach Anspruch 9,
**dadurch gekennzeichnet, dass** die oxidationskatalytische Beschichtung in den Kanalwänden des Wandflussfiltersubstrats zwischen Einlass- und Auslasskanälen enthalten ist.

11. Abgasnachbehandlungssystem nach Anspruch 10,
**dadurch gekennzeichnet, dass** das katalytisch aktivierte Partikelfilter weiterhin in den Einlasskanälen eine auf die Kanalwände aufgebrachte anströmseitige Beschichtungszone enthält, die sich über 10 - 50 % der Länge des Filters erstreckt und eine weitere oxidationskatalytisch aktive Beschichtung, enthaltend eines oder mehrere Edelmetalle ausgewählt aus der Gruppe bestehend aus Platin, Palladium und Rhodium, umfasst.

12. Abgasnachbehandlungssystem zur Durchführung des Verfahrens nach Anspruch 5,
**dadurch gekennzeichnet, dass** abströmseitig zum zweiten SCR-Katalysator ein Ammoniakoxidationskatalysator angeordnet ist.

13. Abgasnachbehandlungssystem nach Anspruch 12,
**dadurch gekennzeichnet, dass** der Ammoniakschlupfkatalysator als abströmseitige Beschichtungszone auf dem zweiten SCR-Katalysator angeordnet ist.

14. Abgasnachbehandlungssystem zur Durchführung des Verfahrens nach Anspruch 6,
**dadurch gekennzeichnet, dass** zwischen dem ersten SCR-Katalysator und dem katalytisch aktivierten Partikelfilter ein Dieseloxidationskatalysator angeordnet ist.

15. Abgasnachbehandlungssystem nach Anspruch 14,
**dadurch gekennzeichnet, dass** der Dieseloxidationskatalysator als abströmseitige Beschichtungszone auf dem ersten SCR-Katalysator angeordnet ist.
